# EUROPÄISCHE PATENTSCHRIFT

(11) **EP 2 941 943 B1**
(45) Veröffentlichungstag und Bekanntmachung des Hinweises auf die Patenterteilung: **02.11.2016**
(21) Anmeldenummer: 15001285.4
(22) Anmeldetag: 30.04.2015
(51) Int. Cl.: B07B 9/00

(54) **TRENNVORRICHTUNG FÜR EINE KARTOFFELERNTEMASCHINE**
SEPARATOR DEVICE FOR A POTATO HARVESTER
DISPOSITIF DE TRIAGE POUR UNE MACHINE DE RÉCOLTE DE POMMES DE TERRE

(30) Priorität: 10.05.2014 DE 102014006843
(43) Veröffentlichungstag der Anmeldung: 11.11.2015
(73) Patentinhaber: Grimme Landmaschinenfabrik GmbH & Co. KG, 49401 Damme (DE)
(72) Erfinder: Dettmer, Franz-Josef, 49577 Ankum (DE); Döhmann, Christian, 49594 Alfhausen (DE)
(74) Vertreter: Busse & Busse

(56) Entgegenhaltungen:
- DD-A3- 206 884
- DE-A1-102012 016 057
- GB-A- 711 984
- US-A- 2 653 712
- US-A- 3 429 438

## Beschreibung

Die Erfindung betrifft eine Kartoffelerntemaschine, die mit einer das aufgenommene Erntegut von Kluten, Steinen, Kraut o. dgl. mitgeförderten Beimengungen lösenden Trennvorrichtung gemäß dem Oberbegriff des Anspruchs 1 versehen ist.

Für Maschinen und Anlagen zur Hackfruchtbe- und verarbeitung, insbesondere Kartoffelerntemaschinen, sind unterschiedliche Verfahrensvarianten bekannt. Insbesondere zum Trennen von Kartoffeln o. dgl. Erntegut aus einem aufgenommenen Bodengemisch mit Kluten, Steinen, ähnlichen Festkörpern sowie fasrigen Beimengungen werden unterschiedliche Konzepte von mechanischen Trennvorrichtungen mit Bändern und Sieben eingesetzt (Firmenprospekt, Grimme Landmaschinenfabrik GmbH & Co. KG, Damme; "Produktprogramm", GEN.00283, 08/13/5000; Erntetechnik, S. 14 bis 23).

Bei einer Lösung gemäß DE 10 2012 016 057 A1 wird zur Beeinflussung des mittels einer Kartoffelerntemaschine aufgenommenen Gemisches zusätzlich ein Luftstrom genutzt, der im Bereich eines Rückhalteelementes auf die von einem Förderer über eine Fallstufe verlagerten Trenngüter einwirkt. Dieser Luftstrom wird auf das im Bereich des Rückhalteelementes aufgelockert vorliegende Gemisch geleitet, so dass im Bereich eines fluidischen Trennbettes eine in entgegengesetzt verlaufende Förderrichtungen aktivierte Weiterleitung von Erntegut und Festkörpern unterstützt wird.

Bei einer Sortier- und Trennvorrichtung gemäß DD 206 884 A3 wird das Erntegut-Gemisch über eine als Teil einer mehrgliedrigen Förderstrecke vorgesehene Rutsche geleitet, so dass an deren unterem Ende ein seitlicher Luftstrom auf das herabfallende Gemisch einwirken kann.

Die Erfindung befasst sich mit dem Problem, eine im Bereich ihrer Förderstrecke mit zumindest einer fluidischen Trennvorrichtung versehene Kartoffelerntemaschine so zu gestalten, dass mit geringem technischem Aufwand ein bereits im System wirksamer Luftstrom für eine zusätzliche Verbesserung von maschineninternen Trennvorgängen genutzt werden kann und bei diesen insbesondere eine gezielte Ableitung von Beimengungen mit verbesserter Energiebilanz sowie hohem Wirkungsgrad möglich ist.

Die Erfindung löst diese Aufgabe mit einer Maschine mit den Merkmalen des Anspruchs 1. Weitere vorteilhafte Ausgestaltungen ergeben sich aus den Ansprüchen 2 bis 18.

Eine Kartoffelerntemaschine oder eine Aufbereitungsmaschine mit einer deren Erntegut von Beimengungen trennenden Trennvorrichtung ist aus der DE 10 2012 016 057 A1 bekannt. Dabei wird ein als zusätzliche Wirkkomponente auf das Gemisch einwirkender Luftstrom in einer auf einem Rückhalteelement erzeugten Trenn- und Sortierphase zum zusätzlichen Energieeintrag so genutzt, dass insbesondere der Abfluss von Festkörpern und gereinigtem Erntegut unterstützt wird.

Eine erfindungsgemäße Verbesserung einer derartigen Trennvorrichtung sieht vor, dass ausgehend von dem primär erzeugten Luftstrom nunmehr ein aus dem Bereich des Rückhalteelementes austretender Abluftstrom zumindest teilweise als Energieträger so genutzt wird, dass innerhalb der Kartoffelerntemaschine ablaufende Förder- und Sortierkomponenten zusätzlich beeinflusst werden können.

Dabei ist vorgesehen, dass der bisher nach dem Austritt aus dem Bereich des Rückhalteelementes wenig genutzte Abluftstrom nunmehr zumindest teilweise mit einer sich im Wesentlichen oberhalb des Rückhalteelementes erstreckenden Funktionseinheit zusammenwirkt. Ausgehend von dem am Rückhalteelement austretenden Abluftstrom bildet dieser nunmehr den zumindest einen Teilluftstrom, der entsprechend seiner Ablenkung und/oder Umleitung im Bereich der Funktionseinheit weitgehend variabel in maschinenintegrierten Nutzbereichen wirksam werden kann.

Ausgehend von diesem Basiskonzept einer "Zweitnutzung" der Abluftenergie ist denkbar, dass der Abluftstrom im Bereich vor und/oder hinter der Funktionseinheit auch in mehrere Teilluftströme teilbar ist. Die variable Gestaltung der Funktionseinheit ist dabei so ausgelegt, dass der Teilluftstrom bzw. die Teilluftströme mittels jeweiliger Baugruppen von Hand einstellbar oder automatisch steuerbar sein kann/können.

Ausgehend von der im Wesentlichen vertikalen Ausrichtung des aus dem Rückhalteelement insbesondere oberhalb dessen Mischzone austretenden Abluftstromes kann dieser auch mit anpassbaren Strömungswinkeln zur Funktionseinheit hin ausgerichtet werden, und ausgehend von dieser ist dann ein gerichteter Teilluftstrom ableitbar. Ebenso ist denkbar, seitlich neben dem Rückhalteelement abgeleitete Abluftkomponenten zusätzlich zu erfassen, weiterzuleiten und mittels der Funktionseinheit eine "verlustfreie" Strömungszone bereitzustellen.

Die funktionale Wirkung des austretenden Abluftstromes ist insbesondere auf die Erfassung von auf dem Rückhalteelement oder in dessen Nahbereich befindlichem Trenngut in Form von "leichten" Beimengungen gerichtet. Dieses kann mittels des Abluftstromes in Richtung der Funktionseinheit verlagert und dann von hier aus gezielt abgeleitet werden. Die Funktionseinheit kann dabei auch so ausgelegt werden, dass die das Trenngut enthaltenden Teilluftströme in variierbaren Richtungen verlagert werden.

Die konstruktive Gestaltung im Bereich der Funktionseinheit sieht vor, dass diese mit zumindest einem den Abluftstrom und die aus diesem gebildeten Teilluftströme erfassenden Luftleitblech versehen wird. Dieses Luftleitblech ist entsprechend den umgebenden Baugruppen der Maschine und dem vorhandenen Freiraum an die unterschiedlichsten Wirkkonzepte gezielter Luftleitung und damit Energieausnutzung anpassbar.

In vorteilhafter Ausführung des Maschinenkonzeptes ist vorgesehen, dass die Funktionseinheit im Nahbereich zumindest eines in der Maschine umlaufenden Krautbandes o. dgl. Förderers für Beimengungen angeordnet wird. Zu diesem Förderer hin kann zumindest einer der Teilluftströme des vom Luftleitblech beeinflussten Abluftstromes ausgerichtet werden, so dass in diesem Bereich eine gezielte Systembeeinflussung mit zusätzlicher Reinigungswirkung möglich ist.

Der in üblicher Ausführung als ein Krautband ausgebildete Förderer wird so in das System integriert, dass der Förderer innerhalb der Maschine zumindest bereichsweise oberhalb des Luftleitbleches umläuft. In Strömungsrichtung des Abluftstromes vor diesem oberen Bereich ist das zumindest eine Luftleitblech so platziert, dass dieses an seinem abstromseitigen Ende für den zumindest einen Teilluftstrom eine definierte Richtung vorgibt. Damit kann der Teilluftstrom direkt auf das umlaufende Krautband geleitet werden, so dass Luft mit hoher Geschwindigkeit durch dieses hindurchgeblasen wird und zumindest fasrige Teile entfernt werden. Denkbar ist dabei auch die Erzeugung mehrerer paralleler oder turbulenter Teilluftströme. Ebenso ist denkbar, den Teilluftstrom zumindest bereichsweise in Laufrichtung des Krautbandes parallel auszurichten, um einen verbesserten Abstreifeffekt zu erzielen.

In zweckmäßiger Ausführung wird vom Luftleitblech zumindest der eine auf einen Teilbereich des Rücklauftrums des Krautbandes gerichtete und beim Freiblasen des Krautbandes nutzbare Teilluftstrom so aufgebaut, dass mit maximaler Blasleistung ein hoher Wirkungsgrad der Reinigung erreicht wird.

Im komplexen Zusammenspiel der Komponenten des Trennvorgangs in der Maschine wird nunmehr die Luftumlenkung mit der zusätzlichen Reinigungswirkung erstmals effektiv genutzt. Das Gesamtkonzept geht davon aus, dass das oberhalb der Funktionseinheit umgelenkte Krautband innerhalb der Maschine über einen unteren Rücklauftrum zu einem oberhalb der Fördereinrichtung des Gemisches geführten Vorlauftrum verläuft. Dieser Vorlauftrum kann im Bereich vor dem Rückhalteelement der Trennvorrichtung insbesondere die fasrigen Teile des Trenngutes erfassen und weiterfördern. Damit gelangt dieses fasrige Trenngut in den Bereich des Luftleitbleches und kann vom Krautband gezielt durch den zumindest einen Teilluftstrom abgeblasen werden.

Ausgehend von dem vorbeschriebenen Konzept ist denkbar, dass die Funktionseinheit auch insgesamt aus mehreren Luftleitblechen gebildet wird. Dabei können die Luftleitbleche in einer parallelen Übereinanderanordnung ausgerichtet sein. Ebenso ist denkbar, eine beabstandete Hintereinanderlage der Luftleitbleche vorzusehen. In jedem Falle wird erreicht, dass die jeweiligen Teilluftströme des Abluftstromes bei dieser Mehrfachanordnung gerichtet abgeleitet werden. Dabei kann durch entsprechende Verstellmöglichkeiten im Bereich der einstellbaren Halterungen der Luftleitbleche deren jeweilige Ableitrichtung variiert werden. Hier sind unterschiedliche Voreinstellungen von Hand oder auch automatisch einstellbare Stellelemente denkbar.

Eine effiziente Gestaltung im Bereich der Luftleitbleche sieht vor, dass in deren Bereich der Abluftstrom und/oder dessen Teilluftströme jeweils entgegen der Fahrtrichtung und/oder im Wesentlichen quer zu dieser geführt werden können. Daraus ergeben sich für das abzublasende Trenngut unterschiedliche Ausförderbereiche aus der Maschine heraus. Das Trenngut kann damit effektiv verteilt werden.

Ausgehend davon, dass die in den Teilluftströmen enthaltene Förderenergie optimal genutzt werden soll, ist vorgesehen, dass die Funktionseinheit im Bereich des oberen Leitbleches mit seitlich an diesem angeordneten Begrenzungsblechen versehen ist. Damit können durch einen weitgehend abgeschirmten Innenraum ungewollte Luftaustritte und Druckverluste vermieden werden. Durch die insbesondere nach hinten gerichteten Teilluftströme wird eine optimale Säuberungswirkung erzielt.

In Erweiterung des vorbeschriebenen Konzeptes ist vorgesehen, dass die Funktionseinheit im Wirkbereich des Abluftstromes und der gerichtet erzeugten Teilluftströme mit zumindest einer Abdeckhaube zusammenwirkt. Diese einteilig oder mehrteilig ausgebildete Abdeckhaube ist dabei zumindest bereichsweise klappbar, so dass zusätzlich zu der Beeinflussung durch die Funktionseinheit ein in deren Bereich erzeugter Trenngut-Strom gezielt abgelenkt werden kann und dabei eine "staubfreie" Ablage von Beimengungen auf dem Ackerboden neben oder hinter der Maschine erfolgt.

Das Konzept der Abdeckhaube sieht auch vor, dass diese zumindest bereichsweise auf variable Funktionslagen einstellbar ist. Ausgehend vom Gesamtsystem der Maschine ist vorteilhaft vorgesehen, dass die Abdeckhaube insbesondere in eine die Länge der Maschine beim Straßentransport vorteilhaft reduzierende Nichtgebrauchsstellung verlagerbar ist.

Weitere Einzelheiten und vorteilhafte Ausgestaltungen der Erfindung ergeben sich aus der nachfolgenden Beschreibung und der Zeichnung, in der ein Ausführungsbeispiel der erfindungsgemäßen Vorrichtung veranschaulicht ist. In der Zeichnung zeigen:
- Fig. 1: eine Seitenansicht einer den Stand der Technik bildenden Trennvorrichtung,
- Fig. 2: eine teilweise geschnittene Seitenansicht einer die Trennvorrichtung enthaltenden Kartoffelerntemaschine,
- Fig. 3: eine Prinzipdarstellung des Systems ähnlich Fig. 2 in Ausschnittsdarstellung, und
- Fig. 4: eine teilweise geschnittene Ansicht ähnlich Fig. 2 mit einer als hintere Abdeckung vorgesehenen Haubenkonstruktion.

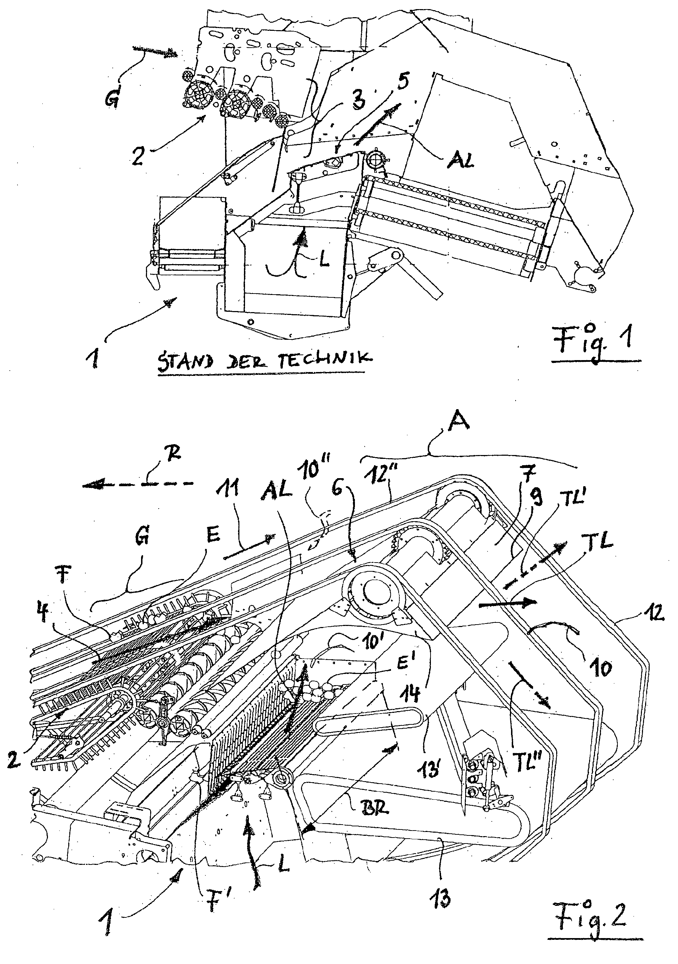

In Fig. 1 ist eine aus dem Stand der Technik bekannte, insgesamt mit 1 bezeichnete Trennvorrichtung dargestellt, die gemäß Darstellung in Fig. 2 in eine Kartoffelerntemaschine A integriert ist. In jedem Falle ist diese Trennvorrichtung 1 zum Trennen von Kartoffeln o. dgl. Erntegut E aus einem Gemisch G mit Kluten, Steinen und ähnlichen Festkörpern F vorgesehen. Dabei wird das Gemisch G als ein Förderstrom 4 mittels einer insgesamt mit 2 bezeichneten Fördereinrichtung aus einem nicht näher dargestellten Aufnahmebereich der Maschine A heraus zugeführt. Dieser Förderstrecke folgend, gelangt das Gemisch G in den Bereich einer Fallstufe 3 (Fig. 1), von der aus das sich zunehmend lockernde Gemisch G auf ein Rückhalteelement 5 im Bereich der Trennvorrichtung 1 bewegt wird. In diesem Bereich erfolgt die eigentliche "Sortierung" der wesentlichen Komponenten des Gemisches G, wobei das Erntegut E' und die Festkörper F' in einer jeweiligen im Wesentlichen entgegengesetzt verlaufenden Förderrichtung getrennt weitergeleitet werden. Diese Trennphase wird durch den mittels eines externen Gebläses (nicht dargestellt) erzeugten Luftstrom L unterstützt.

Das erfindungsgemäß verbesserte Konzept sieht nunmehr im Bereich der Trennvorrichtung 1 eine optimierte Nutzung des Luftstromes L vor. Dazu ist vorgesehen, dass ein aus dem Bereich des Rückhalteelementes 5 austretender Abluftstrom AL zumindest teilweise mit einer sich im Wesentlichen oberhalb des Rückhalteelementes 5 erstreckenden und zumindest einen maschinenintegriert nutzbaren Teilluftstrom TL bildenden Funktionseinheit 6 zusammenwirkt.

Ausgehend von dem sich im Wesentlichen über die Breite BR des Rückhalteelementes 5 erstreckenden Abluftstromes AL ist vorgesehen, dass dieser ausgehend von dem Teilluftstrom TL auch in mehrere Teilluftströme TL', TL" teilbar sein kann (Fig. 2). Die Gestaltung der Funktionseinheit 6 kann dabei auch darauf abgestellt sein, dass bereits der Abluftstrom AL im Nahbereich des Rückhalteelementes 5 in mehrere Teilluftströme und/oder Teilstromrichtungen aufgeteilt wird (nicht dargestellt).

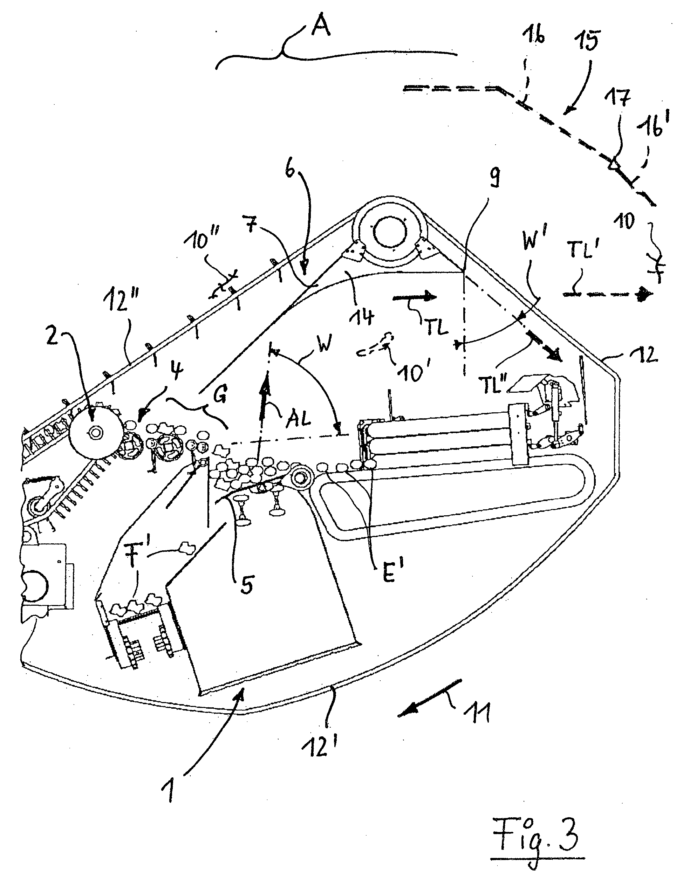

Ausgehend von dem allgemeinen Konzept der in die Maschine A integrierten Funktionseinheit 6 ist vorgesehen, dass diese mit unterschiedlichen Steuerfunktionen ausgerüstet werden kann. Dabei sind konstruktive Möglichkeiten vorgesehen, mit denen bereits der Abluftstrom AL mit anpassbaren bzw. variablen Strömungswinkeln zur Funktionseinheit 6 hin ausgerichtet werden kann (Winkel W, Fig. 3). Diese Anpassung der Strömungswinkel W ist auch im Bereich der abströmenden Teilluftströme TL, TL', TL" variabel vorgesehen, wobei in Fig. 3 mit einem Winkel W' eine Variante dieser Stromführung verdeutlicht ist.

Mit dem erfindungsgemäßen Konzept des gesteuerten Abluftstromes AL wird erreicht, dass von dieser Strömung AL erfasstes Trenngut 10' (Fig. 2) in Richtung der Funktionseinheit 6 verlagert und von dieser in den angegebenen Richtungen der Teilluftströme TL abgeleitet werden kann. Das Trenngut, beispielsweise in Form von fasrigen Pflanzenresten, Krautbestandteilen o. dgl. Beimengungen 10, kann dabei in jeweils konstanten oder variierbaren Richtungen verlagert werden.

Das vergleichsweise einfachste Konzept der Konstruktion im Bereich der Funktionseinheit 6 sieht vor, dass diese mit zumindest einer den Abluftstrom AL erfassenden Baugruppe in Form eines Luftleitbleches 7 versehen wird.

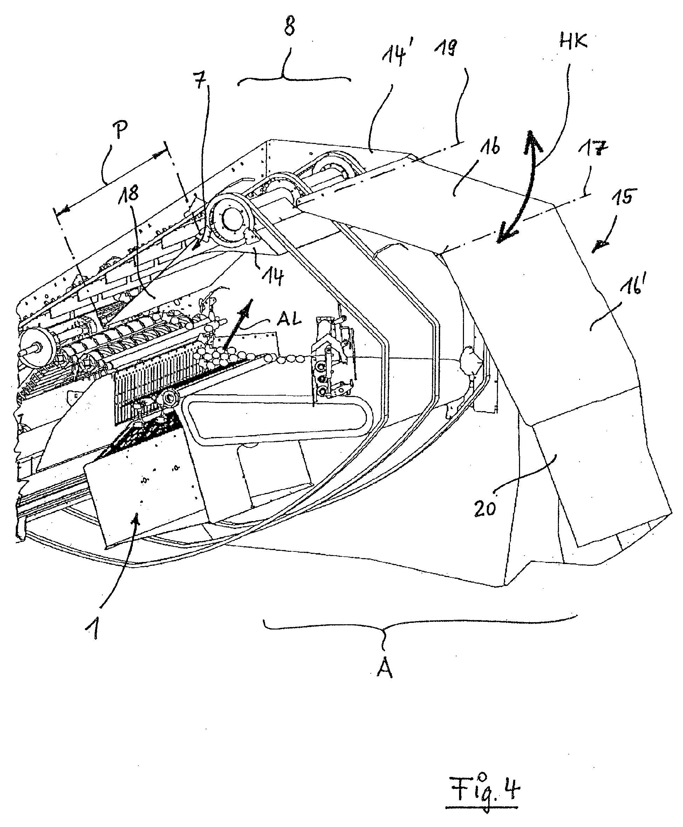

Aus dem Gesamtkonzept der Maschine A gemäß Fig. 2 und Fig. 4 wird deutlich, dass diese mit zumindest einem in der Maschine A umlaufenden Krautband o. dgl. Förderer 8 versehen ist und zu diesem hin zumindest der eine Teilluftstrom TL des vom Luftleitblech 7 beeinflussten Abluftstromes AL ausrichtbar ist. Der als Krautband ausgebildete Förderer 8 ist bei diesem Konzept zumindest bereichsweise oberhalb des Luftleitbleches 7 angeordnet. Damit wird die Voraussetzung geschaffen, das am abstromseitigen Ende 9 des Luftleitbleches 7 der zumindest eine Teilluftstrom TL auf das umlaufende Krautband 8 leitbar ist und mittels des Teilluftstromes TL' jeweilige Beimengungen 10 in Form von Faserteilen abgefördert werden.

Dieses Konzept mit dem in Pfeilrichtung 11 umlaufenden Krautband 8 sieht vor, dass vom mit diesem zusammenwirkenden Luftleitblech 7 zumindest der eine auf einen Teilbereich des Rücklauftrums 12 gerichtete und zum Freiblasen des Krautbandes 8 nutzbare Teilluftstrom TL' gebildet wird.

Das oberhalb der Funktionseinheit 6 umgelenkte Krautband 8 wird innerhalb der Maschine A über einen unteren Rücklauftrum 12' zu einem Vorlauftrum 12" geführt (Fig. 3), der dann oberhalb der vorderen Fördereinrichtung 2 des Gemisches G verläuft. Damit wird deutlich, dass der Vorlauftrum 12" im Bereich vor dem Rückhalteelement 5 der Trennvorrichtung 1 im Aufnahmebereich der Maschine A bereits fasrige Teile des Trenngutes als Beimengungen 10" erfassen kann und dieses fasrige Trenngut hinter dem Luftleitblech 7 gemeinsam mit den Teilen 10, 10' in der dargestellten Weise vom Krautband 8 abgeblasen wird.

Unabhängig von dieser optimalen Anwendung des erfindungsgemäßen Luft-Nutz-Systems AL sind auch andere, hier nicht näher dargestellte Möglichkeiten der gezielten Luftlenkung, beispielsweise in den Bereich eines nachgeordneten Förderbandes 13 (Fig. 2), für das Erntegut E' denkbar. Ebenso kann das abgeblasene Trenngut 10' auf einen Querförderer 13 o. dgl. Leitelement gerichtet werden.

Die konstruktive Ausgestaltung der Funktionseinheit 6 sieht ebenfalls vor, dass diese mit mehreren Luftleitblechen versehen sein kann. Diese nicht näher dargestellte Ausführung mehrerer Luftleitbleche kann dabei eine Übereinanderanordnung und/oder eine beabstandete Hintereinanderanordnung von Bauteilen aufweisen, so dass jeweilige, variabel ausrichtbare Teilluftströme aus dem Abluftstrom AL gebildet werden.

In der dargestellten Ausführung der Luftführung ist vorgesehen, dass der Abluftstrom AL und/oder dessen Teilluftströme TL" wahlweise entgegen der Fahrtrichtung R und/oder im Wesentlichen quer zu dieser geführt sein können.

Eine weitere Optimierung der Bauteile im Bereich der Funktionseinheit 6 sieht vor, dass diese im Bereich des oberen Luftleitbleches 7 zusätzlich zu einem in variabler Länge P ausführbaren Prallblech 18 mit seitlich an diesem angeordneten Begrenzungsblechen 14 (Fig. 2, Fig. 4) unterschiedlicher Länge und Konturform versehen sein kann. Damit ist eine weitere Möglichkeit angedeutet, durch derartige zusätzliche Leitelemente eine Konzentration des Abluftstromes AL zu erreichen, so dass ungewollte Luftableitungen in wenig effizient einsetzbare Richtungen vermieden sind. Aus Fig. 4 wird deutlich, dass im seitlichen Bereich neben dem Luftleitblech 7 jeweilige Begrenzungsbleche 14' vorgesehen sind, so dass das gesamte Luft-Leit-System in einer weitgehend geschlossenen Hüllkontur effizient einsetzbar ist.

Eine weitere Ausgestaltung des Systems sieht vor, dass die Funktionseinheit 6 im Bereich des oberen Leitbleches 7 mit einer zusätzlichen Abdeckhaube 15 (Strichdarstellung, Fig. 3, Fig. 4) versehen sein kann. Damit wird der Wirkbereich des Abluftstromes AL bzw. der Teilluftströme TL', TL" zusätzlich so unterstützt, dass der gesteuerte Abtransport von Beimengungen effizient gestaltet werden kann. Dabei ist insbesondere eine weitgehend "staubfreie" Ableitung des Trenngutes zum Ackerboden hinter der Maschine A hin vorgesehen.

Eine vorteilhafte Ausführung des Systems sieht vor, dass die mehrteilig ausgebildete Abdeckhaube 15 mit zumindest zwei Teilstücken 16, 16' versehen und damit die Abdeckhaube 15 bereichsweise klappbar ist (Pfeil HK, Fig. 4). Dazu kann insbesondere das hintere der beiden Teilstücke 16' in einem Gelenk 17 beweglich fixiert sein. Damit wird die Abdeckhaube 15 zumindest bereichsweise auf variable Funktionslagen einstellbar und eine Staub mindernde Abdeckung erreicht. Dazu ist am hinteren Teilstück 16' - in an sich bekannter Ausführung - ein Staubtuch 20 o. dgl. Bremselement vorgesehen.

In vorteilhafter Ausführung ist auch vorgesehen, dass die Abdeckhaube 15 in eine die Gesamtlänge der Maschine A reduzierende Nichtgebrauchsstellung verlagert werden kann, so dass für einen Straßentransport des Systems optimale Bedingungen einstellbar sind. Denkbar ist dabei eine zusätzliche Verlagerung der Abdeckhaube 15 im Bereich einer Stützachse 19 oder eine Faltlage (nicht dargestellt) der Teilstücke 16, 16'.

## Patentansprüche

1. Trennvorrichtung für eine Kartoffelerntemaschine oder eine Aufbereitungsmaschine (A) zum Trennen von Kartoffeln o. dgl. Erntegut (E) aus einem Gemisch (G) mit Kluten, Steinen und ähnlichen Festkörpern (F), mit einer das im Wesentlichen kompakte Gemisch (G) zuführenden Fördereinrichtung (2), von der aus das in den Bereich zumindest einer Fallstufe (3) verlagerte Gemisch (G) trennbar ist, wobei nachfolgend der eine Auflockerung des Gemisches (G) bewirkenden Fallstufe (3) zumindest ein den fallenden Trenngütern (E, F) entgegen gerichtetes und mit zumindest einem Luftstrom (L) zusammenwirkendes Rückhalteelement (5) vorgesehen ist, derart, dass von diesem ausgehend als jeweils sortierte Einzelteile zumindest das Erntegut (E) und die Festkörper (F) in einer jeweiligen im Wesentlichen entgegengesetzt verlaufenden Förderrichtung getrennt weiterleitbar sind, **dadurch gekennzeichnet, dass** ein aus dem Bereich des Rückhalteelementes (5) austretender Abluftstrom (AL) zumindest teilweise mit einer sich im Wesentlichen oberhalb des Rückhalteelementes (5) erstreckenden und zumindest einen maschinenintegriert nutzbaren Teilluftstrom (TL) bildenden Funktionseinheit (6) zusammenwirkt, wobei der zumindest eine Teilluftstrom (TL, TL', TL") zumindest mittels der Funktionseinheit (6) steuerbar ist.

2. Trennvorrichtung nach Anspruch 1, **dadurch gekennzeichnet, dass** der Abluftstrom (AL) im Bereich der Funktionseinheit (6) in mehrere Teilluftströme (TL, TL', TL") teilbar ist.

3. Trennvorrichtung nach Anspruch 1 oder 2, **dadurch gekennzeichnet, dass** der Abluftstrom (AL) mit anpassbarem Strömungswinkel (W) zur Funktionseinheit (6) hin ausrichtbar und von dieser als gerichteter Teilluftstrom (TL', TL") ableitbar (Winkel W) ist.

4. Trennvorrichtung nach einem der Ansprüche 1 bis 3, **dadurch gekennzeichnet, dass** ausgehend vom austretenden Abluftstrom (AL) jeweils von diesem erfasstes Trenngut (10, 10') in Richtung der Funktionseinheit (6) verlagerbar und von dieser ableitbar ist.

5. Trennvorrichtung nach Anspruch 2 und 4, **dadurch gekennzeichnet, dass** die Trenngut (10, 10') enthaltenden Teilluftströme (TL, TL', TL") in variierbaren Richtungen verlagerbar sind.

6. Trennvorrichtung nach einem der Ansprüche 1 bis 5, **dadurch gekennzeichnet, dass** im Bereich der Funktionseinheit (6) zumindest ein den Abluftstrom (AL) erfassendes Luftleitblech (7) vorgesehen ist.

7. Trennvorrichtung nach Anspruch 6, **dadurch gekennzeichnet, dass** im Bereich der Funktionseinheit (6) zumindest ein in der Maschine (A) umlaufendes Krautband o. dgl. Förderer (8) vorgesehen und zu diesem hin zumindest der eine Teilluftstrom (TL) des vom Luftleitblech (7) beeinflussbaren Abluftstromes (AL) ausrichtbar ist.

8. Trennvorrichtung nach Anspruch 7, **dadurch gekennzeichnet, dass** der als Krautband ausgebildete Förderer (8) zumindest bereichsweise oberhalb des Luftleitbleches (7) verläuft, derart, dass am abstromseitigen Ende (9) des Luftleitbleches (7) der zumindest eine Teilluftstrom (TL') auf das umlaufende Krautband (8) leitbar ist.

9. Trennvorrichtung nach Anspruch 8, **dadurch gekennzeichnet, dass** vom Luftleitblech (7) zumindest der eine auf einen Teilbereich eines Rücklauftrums des Krautbandes gerichtete und zum Freiblasen des Krautbandes (8) nutzbare Teilluftstrom (TL', TL") gebildet ist.

10. Trennvorrichtung nach Anspruch 8 oder 9, **dadurch gekennzeichnet, dass** das oberhalb der Funktionseinheit (6) umgelenkte Krautband (8) innerhalb der Maschine (A) über einen unteren Rücklauftrum (12') zu einem oberhalb der Fördereinrichtung (2) des Gemisches (G) geführten Vorlauftrum (12") verläuft, dieser im Bereich vor dem Rückhalteelement (5) der Trennvorrichtung (1) insbesondere die fasrigen Teile des Trenngutes (10") erfasst und dieses fasrige Trenngut (10, 10', 10") hinter dem Luftleitblech (7) vom Krautband (8) abblasbar ist.

11. Trennvorrichtung nach einem der Ansprüche 1 bis 10, **dadurch gekennzeichnet, dass** die Funktionseinheit (6) mit mehreren Luftleitblechen (7) versehen ist.

12. Trennvorrichtung nach 2 und 11, **dadurch gekennzeichnet, dass** Luftleitbleche (7) in paralleler Übereinanderanordnung und/oder beabstandeter Hintereinanderlage die jeweiligen Teilluftströme (TL, TL', TL") des Abluftstromes (AL) gerichtet ableiten.

13. Trennvorrichtung nach einem der Ansprüche 2 bis 12, **dadurch gekennzeichnet, dass** der Abluftstrom (AL) und/oder dessen Teilluftströme (TL, TL', TL") entgegen der Fahrtrichtung (R) und/oder im Wesentlichen quer zu dieser geführt sind.

14. Trennvorrichtung nach Anspruch 12, **dadurch gekennzeichnet, dass** die Funktionseinheit (6) im Bereich eines oberen Leitbleches (7) mit seitlich an diesem angeordneten Begrenzungsblechen (14) versehen ist.

15. Trennvorrichtung nach einem der Ansprüche 2 bis 14, **dadurch gekennzeichnet, dass** die Funktionseinheit (6) im Wirkbereich der Abluft (AL) bzw. der Teilluftströme (TL, TL', TL") mit zumindest einer Abdeckhaube (15) zusammenwirkt.

16. Trennvorrichtung nach Anspruch 15, **dadurch gekennzeichnet, dass** die ein- oder mehrteilig ausgebildete Abdeckhaube (15) zumindest bereichsweise klappbare Teilstücke (16, 16') aufweist.

17. Trennvorrichtung nach Anspruch 15 oder 16, **dadurch gekennzeichnet, dass** die Abdeckhaube (15) zumindest bereichsweise auf variable Funktionslagen einstellbar ist.

18. Trennvorrichtung nach einem der Ansprüche 15 bis 17, **dadurch gekennzeichnet, dass** die Abdeckhaube (15) in eine die Länge der Maschine (A) reduzierende Nichtgebrauchsstellung verlagerbar ist.

## Claims

1. Separating apparatus for a potato harvesting machine or a processing machine (A) for separating a crop (E) of potatoes or the like from a mixture (G) containing clods, rocks and other similar solids (F), comprising a conveying device (2) which supplies the substantially compact mixture (G), out of which the mixture (G) that has moved into the region of at least one drop stage (3) can be separated, at least one retaining element (5), which faces away from the separated goods (E, F) being dropped and interacts with at least one air stream (L), being provided downstream of the drop stage (3), which causes the mixture (G) to break up, such that at least the crop (E) and the solids (F) can each be transported further, away from said retaining element, as sorted individual parts in substantially opposite conveying directions, **characterised in that** a discharge air stream (AL) exiting the region of the retaining element (5) at least partially interacts with a functional unit (6) which extends substantially above the retaining element (5) and forms at least one partial air stream (TL) which can be used in a machine-integrated manner, it being possible to control the at least one partial air stream (TL, TL', TL") at least by means of the functional unit (6).

2. Separating apparatus according to claim 1, **characterised in that** the discharge air stream (AL) can be divided into a plurality of partial air streams (TL, TL', TL") in the region of the functional unit (6).

3. Separating apparatus according to either claim 1 or claim 2, **characterised in that** the discharge air stream (AL) can be directed towards the functional unit (6) at an adjustable flow angle (W) and can be conducted away from said functional unit as a directed partial air stream (TL', TL") (angle W).

4. Separating apparatus according to any of claims 1 to 3, **characterised in that**, starting from the discharge air stream (AL), separated goods (10, 10') carried away by said air stream in each case, can be moved towards the functional unit (6) and conducted away therefrom.

5. Separating apparatus according to claims 2 and 4, **characterised in that** the partial air streams (TL, TL', TL") containing the separated goods (10, 10') can be moved in variable directions.

6. Separating apparatus according to any of claims 1 to 5, **characterised in that** at least one air baffle plate (7) which catches the air stream (AL) is provided in the region of the functional unit (6).

7. Separating apparatus according to claim 6, **characterised in that** at least one haulm belt or another similar conveyor (8) circulating in the machine (A) is provided in the region of the functional unit (6), and the at least one partial air stream (TL) of the discharge air stream (AL) that can be influenced by the air baffle plate (7) can be directed towards said haulm belt or conveyor.

8. Separating apparatus according to claim 7, **characterised in that** the conveyer (8) designed as a haulm belt extends at least in regions above the air baffle plate (7) such that, at a downstream end (9) of the air baffle plate (7), the at least one partial air stream (TL') can be conducted onto the circulating haulm belt (8).

9. Separating apparatus according to claim 8, **characterised in that** at least one partial air stream (TL', TL") which is directed at a sub-region of a return side of the haulm belt and can be used to clean the haulm belt (8) by blowing is formed by the air baffle plate (7).

10. Separating apparatus according to either claim 8 or claim 9, **characterised in that** the haulm belt (8) that is diverted above the functional unit (6) extends within the machine (A), via a lower return side (12'), towards an upper advancement side (12") which is guided above the conveyor device (2) of the mixture (G), which upper advancement side carries away the fibrous parts of the separated goods (10") in particular in the region upstream of the retaining element (5) of the separating apparatus (1), and these fibrous separated goods (10, 10', 10") can be blown off of the haulm belt downstream of the air baffle plate (7).

11. Separating apparatus according to any of claims 1 to 10, **characterised in that** the functional unit (6) is provided with a plurality of air baffle plates (7).

12. Separating apparatus according to claims 2 and 11, **characterised in that** air baffle plates (7), which are arranged parallel to one another in a stacked manner and/or one behind the other with spacing, conduct the respective partial air streams (TL, TL', TL") of the discharge air stream (AL) away in a directed manner.

13. Separating apparatus according to any of claims 2 to 12, **characterised in that** the discharge air stream (AL) and/or the partial air streams (TL, TL', TL") thereof are guided in the opposite direction to the travel direction (R) and/or substantially transverse to said travel direction.

14. Separating apparatus according to claim 12, **characterised in that**, in the region of an upper baffle plate (7), the functional unit (6) is provided with boundary plates (14) which are arranged laterally thereto.

15. Separating apparatus according to any of claims 2 to 14, **characterised in that** the functional unit (6) interacts with at least one cover (15) in the effective region of the discharge air (AL) or the partial air streams (TL, TL', TL").

16. Separating apparatus according to claim 15, **characterised in that** cover (15) consisting of one or more pieces comprises sub-parts (16, 16') which are foldable at least in regions.

17. Separating apparatus according to either claim 15 or claim 16, **characterised in that** the cover (15) can be adjusted at least in regions to variable functional positions.

18. Separating apparatus according to any of claims 15 to 17, **characterised in that** the cover (15) can be moved into a position of non-use which reduces the length of the machine (A).

## Revendications

1. Séparateur pour une récolteuse de pommes de terre ou une machine de traitement (A) pour séparer des pommes de terre des produits de récolte analogues (E) d'un mélange (G) comportant des mottes de terre, des pierres et des corps solides analogues (F), ledit séparateur comportant un moyen de transport (2) qui amène le mélange sensiblement compact (G) et duquel le mélange (G), déplacé dans la région d'au moins un étage de chute (3), peut être séparé, au moins un élément de retenue (5) qui est orienté dans le sens opposé aux produits de séparation (E, F) qui chutent et qui coopère avec au moins un flux d'air (L) étant prévu après l'étage de chute (3) effectuant une désagrégation du mélange (G) de telle sorte qu'au moins le produit de récolte (E) et les corps solides peuvent être emportés séparément comme éléments individuels triés, à partir de cet élément de retenue, dans des sens de transport respectives qui s'étendent à l'opposé l'un de l'autre, **caractérisé en ce qu'**un flux d'air partiel (AL) sortant de la région de l'élément de retenue (5) coopère au moins partiellement avec une unité fonctionnelle (6) qui s'étend sensiblement au-dessus de l'élément de retenue (5) qui forme au moins un flux d'air partiel (TL) utilisable de façon intégrée à la machine, l'au moins flux d'air partiel (TL, TL', TL") pouvant être commandé au moins partiellement au moyen de l'unité fonctionnelle.

2. Séparateur selon la revendication 1, **caractérisé en ce que** le flux d'air d'évacuation (AL) peut être divisé dans la région de l'unité fonctionnelle (6) en une pluralité de flux d'air partiels (TL, TL', TL").

3. Séparateur selon la revendication 1 ou 2, **caractérisé en ce que** le flux d'air d'évacuation (AL) peut être orienté en direction de l'unité fonctionnelle (6) avec un angle d'écoulement réglable (W) et peut être dévié de celle-ci forme sous la forme d'un flux d'air partiel (TL', TL") (angle W).

4. Séparateur selon l'une des revendications 1 à 3, **caractérisé en ce que**, à partir du flux d'air d'évacuation (AL), le produit de séparation (10, 10'), collecté à chaque fois par celui-ci, peut être déplacé en direction de l'unité fonctionnelle (6) et dévié de celle-ci.

5. Séparateur selon l'une des revendications 2 et 4, **caractérisé en ce que** les flux d'air partiels (TL, TL', TL"), contenant le produit de séparation (10, 10'), peuvent être déplacés dans des directions variables.

6. Séparateur selon l'une des revendications 1 à 5, **caractérisé en ce qu'**au moins une tôle de guidage d'air (7), captant le flux d'air d'évacuation (AL), est prévue dans la région de l'unité fonctionnelle (6).

7. Séparateur selon la revendication 6, **caractérisé en ce qu'**au moins un tapis de tamisage ou transporteur analogue (8), en circulation dans la machine (A), est prévu dans la région de l'unité fonctionnelle (6) et l'un au moins des flux d'air partiel (TL) du flux d'air d'évacuation (AL), sur lequel la tôle de guidage d'air (7) peut agir, peut être orienté en direction dudit tapis de tamisage ou transporteur analogue.

8. Séparateur selon la revendication 7, **caractérisé en ce que** le transporteur (8), conformé en tapis de tamisage, s'étend au moins par endroits au-dessus de la tôle de guidage d'air (7) de sorte que, à l'extrémité aval (9) de la tôle de guidage d'air (7), l'au moins un flux d'air partiel (TL') peut être guidé sur le tapis de tamisage (8).

9. Séparateur selon la revendication 8, **caractérisé en ce que** l'un au moins des flux partiels (TL', TL"), dirigé sur une région partielle d'un brin de retour du tapis de tamisage et utilisable pour souffler le tapis de tamisage (8), est formé par la tôle de guidage d'air (7).

10. Séparateur selon la revendication 8 ou 9, **caractérisé en ce que** le tapis de tamisage (8), dévié au-dessus de l'unité fonctionnelle (6), s'étend à l'intérieur de la machine (A) par le biais d'un brin de retour inférieur (12') vers un brin d'avance (12") guidé au-dessus du moyen de transport (2) du mélange (G), **en ce que** ce brin d'avance capture, dans la région en avant de l'élément de retenue (5) du séparateur (1), en particulier les parties fibreuses du produit de séparation (10") et **en ce que** ce produit de séparation fibreux (10, 10', 10") peut être évacué par soufflage du tapis de tamisage en arrière de la tôle de guidage d'air (7).

11. Séparateur selon l'une des revendications 1 à 10, **caractérisé en ce que** l'unité fonctionnelle (6) est pourvue d'une pluralité de tôles de guidage d'air (7).

12. Séparateur selon les revendications 2 et 11, **caractérisé en ce que** des tôles de guidage d'air (7) dévie de façon orientée les flux d'air partiels respectifs (TL, TL', TL'') du flux d'air d'évacuation (AL) en étant disposés les unes au-dessus des autres en parallèle et/ou les unes à la suite des autres à distance.

13. Séparateur selon l'une des revendications 2 à 12, **caractérisé en ce que** le flux d'air d'évacuation (AB) et/ou ses flux d'air partiels (TL, TL', TL") sont guidés à l'opposé du sens de déplacement (R) et/ou sensiblement transversalement à celui-ci.

14. Séparateur selon la revendication 12, **caractérisé en ce que**, dans la région d'une tôle de guidage supérieure (7), l'unité fonctionnelle (6) est pourvue de tôle de limitation (14) disposées latéralement à ladite tôle de guidage supérieure.

15. Séparateur selon l'une des revendications 2 à 14, **caractérisé en ce que**, dans la zone active du flux l'air d'évacuation (AL) ou des flux d'air partiels (TL, TL', TL"), l'unité fonctionnelle (6) coopère avec au moins un capot de recouvrement (15).

16. Séparateur selon la revendication 15, **caractérisé en ce que** le capot de recouvrement (15), formé d'une ou de plusieurs parties, comporte au moins par endroits des sections pliables (16, 16').

17. Séparateur selon la revendication 15 ou 16, **caractérisé en ce que** le capot de recouvrement (15) est réglable au moins par endroits en couches fonctionnelles.

18. Séparateur selon l'une des revendications 15 à 17, **caractérisé en ce que** le capot de recouvrement (15) peut être déplacé dans une position de non-utilisation réduisant la longueur de la machine (A).
